# FASCICULE DE BREVET EUROPEEN

(11) **EP 0 968 812 B1**
(45) Date de publication et mention de la délivrance du brevet: **04.09.2002**
(21) Numéro de dépôt: 98401628.7
(22) Date de dépôt: 30.06.1998
(51) Int. Cl.: B29C 70/54, B29C 45/77

(54) **Installation de fabrication de pièces en matériau composite, par moulage par transfert de résine**
Anlage zur Herstellung von Verbundteilen durch Transfer-Spritzen von Harz (RTM)
Device for manufacturing objects in composite material by resin transfer moulding (RTM)

(43) Date de publication de la demande: 05.01.2000
(73) Titulaire: EADS FRANCE, 75016 Paris (FR)
(72) Inventeur: Boime, Bernard, 92500 Reuil Malmaison (FR); Filleul, Didier, 91140 Villebon/Yvette (FR)
(74) Mandataire: Poulin, Gérard

(56) Documents cités:
- EP-A- 0 357 301
- EP-A- 0 729 822
- WO-A-97/48546
- FR-A- 2 761 001
- US-A- 5 316 707
- US-A- 5 516 271
- US-A- 5 518 388
- US-A- 5 518 390
- US-A- 5 551 486

## Description

### Domaine technique

L'invention concerne une installation de fabrication de pièces en matériau composite, utilisant la technique de moulage par transfert de résine, appelée technique RTM (de l'anglais "Resin Transfer Molding").

Plus précisément, l'installation selon l'invention est conçue pour fabriquer des pièces en matériau composite de grandes dimensions, pouvant présenter à la demande soit un taux volumique de fibres élevé, supérieur à 58 %, soit un taux volumique de fibres plus faible, inférieur à 54 %.

Une telle installation trouve une application privilégiée dans l'industrie aérospatiale, dans laquelle on utilise à la fois des pièces massives de grandes dimensions présentant un taux volumique de fibres élevé et des pièces sandwich de grandes dimensions, dans lesquelles le taux volumique des fibres contenues dans les peaux qui recouvrent l'âme de la structure sandwich est relativement faible.

### Etat de la technique

La technique RTM, est utilisée depuis de nombreuses années, dans certaines industries (automobile, biens d'équipement, etc.), pour fabriquer des pièces présentant un taux volumique de fibres relativement faible, inférieur à 54 %. Elle consiste à introduire une préforme fibreuse sèche dans un moule, puis à injecter sous vide et sous faible pression une résine organique liquide dans le moule, de façon à imprégner la préforme fibreuse. Le chauffage de la préforme imprégnée de résine permet ensuite de polymériser cette dernière avant de procéder au démoulage.

Par rapport aux autres techniques connues de mise en oeuvre des matériaux composites, la technique RTM présente de nombreux avantages tels que la réduction du temps global de mise en oeuvre, le faible niveau d'investissement pour l'ensemble de la chaîne de fabrication (pas de système réfrigérant ni d'autoclave), le calibrage précis des dimensions de la pièce obtenue, notamment en épaisseur, l'excellent état de surface, les très bonnes conditions d'hygiène et de sécurité, etc..

Lorsqu'on désire réaliser des pièces fortement chargées en fibres, présentant un taux volumique de fibres supérieur à 58 %, comme l'impose la fabrication des pièces massives destinées aux industries aéronautique et spatiale, l'injection de la résine dans le moule qui contient la préforme fibreuse sèche doit se faire alors que cette préforme est fortement compactée. Cependant, dans ses procédures de mise en oeuvre connues, la technique RTM ne permet pas de fabriquer des pièces de grandes dimensions présentant un tel compactage.

En effet, la très forte perte de charge introduite par les fibres textiles fortement compactées de la préforme ralentit la pénétration de la résine dans cette dernière.

Par ailleurs, la pression d'injection de la résine doit rester suffisamment faible pour que l'orientation des fibres textiles de la préforme demeure inchangée lors de l'injection. En effet, les caractéristiques mécaniques de la pièce obtenue sont essentiellement définies par l'orientation des fibres textiles contenues dans la matrice de résine.

Par conséquent, lorsque l'on désire fabriquer une pièce de grandes dimensions , le temps nécessaire à la pénétration de la résine dans la totalité de la préforme fibreuse dépasse le temps au-delà duquel la résine commence à polymériser (habituellement appelé "temps de gel"). De plus, l'obstacle à la pénétration de la résine que constituent les fibres textiles fortement compactées risque de créer dans la pièce des zones non imprégnées de résine ainsi que des micro-bulles.

Pour ces différentes raisons, la technique RTM reste à l'heure actuelle pratiquement inutilisée pour la fabrication de pièces de grandes dimensions fortement chargées en fibres.

Dans le document WO-A-97/48546, auquel correspond le préambule de la revendication 1, il a cependant été proposé de réaliser une pièce de grandes dimensions et présentant un taux volumique de fibres élevé, en utilisant la technique RTM. Dans ce cas, la résine est injectée dans le moule à débit constant, jusqu'à ce que la pression instantanée à l'entrée du moule atteigne une consigne de pression déterminée. Le débit d'injection est alors réduit, pour maintenir la pression à la valeur de consigne, et le compactage du moule est temporairement réduit. Le débit d'injection remonte ensuite progressivement jusqu'à l'obtention du débit initial constant et un nouveau cycle est initié.

Par ailleurs, les installations existantes qui utilisent la technique RTM sont généralement des installations adaptées à la fabrication en série de pièces présentant des caractéristiques relativement homogènes, notamment en ce qui concerne leurs dimensions et le taux de fibres qu'elles contiennent. Cette particularité des installations existantes conduit également à rendre ces installations très peu adaptées à l'industrie aérospatiale, dans laquelle des pièces présentant des caractéristiques parfois très différentes sont fabriquées en petites séries. Ainsi, les pièces massives telles que les pièces de structure doivent présenter un taux de fibres élevé, (supérieur à 58 %). Au contraire, les pièces sandwich, qui comportent une âme en nid d'abeilles ou en mousse recouverte de peaux sur leurs deux faces, utilisent généralement un taux de fibres relativement faible (inférieur à 54 %) pour la fabrication des peaux.

Enfin, pour la fabrication des pièces en résine obtenues par moulage par injection, différentes techniques ont été développées afin de piloter au mieux les différents paramètres d'injection tels que le débit, la pression, la température, etc. en tenant compte de la géométrie de la pièce fabriquée. Les documents US-A-5 178 805, US-A-5 316 707, US-A-4 850 217 et US-A-5 551 486 illustrent à titre d'exemples certaines de ces techniques.

Cependant, les contraintes spécifiques à la technique RTM, qui ont été décrites précédemment, n'ont pas permis jusqu'à présent de transposer les techniques utilisées dans le moulage par injection pour fabriquer à la demande, selon la technique RTM, des pièces composites de grandes dimensions présentant un taux de fibres faible ou élevé selon les pièces.

### Exposé de l'invention

L'invention a précisément pour objet une installation de fabrication de pièces en matériau composite, utilisant la technique RTM et permettant de fabriquer à volonté, de façon relativement simple et peu coûteuse, des pièces de grandes dimensions présentant un taux volumique de fibres élevé ou faible, en garantissant à la pièce obtenue une porosité particulièrement faible (1 à 3 % maximum) et sans risque de gélification prématurée de la résine ou de présence de zones non imprégnées de résine à l'intérieur de la pièce.

Selon l'invention, ce résultat est obtenu au moyen d'une installation de fabrication de pièces en matériau composite, par moulage par transfert de résine, ladite installation comprenant :
- au moins un moule apte à recevoir une préforme fibreuse ;
- des moyens de compactage de la préforme dans le moule ;
- au moins un vérin d'injection de résine dans le moule ;
- au moins un pot d'alimentation en résine ;
- des moyens de pilotage aptes à faire fonctionner l'installation dans un mode "débit contrôlé", dans lequel la résine est transférée du pot d'alimentation au vérin d'injection, puis injectée dans le moule par ce vérin, et dans lequel les moyens de compactage assurent généralement un fort compactage de la préforme fibreuse, les moyens de pilotage injectant la résine dans le moule à un débit généralement constant,
ladite installation étant caractérisée en ce que les moyens de pilotage sont également aptes à faire fonctionner l'installation dans un mode "pression contrôlée", dans lequel la résine est injectée directement dans le moule par le pot d'alimentation, à une pression généralement constante, et dans lequel les moyens de compactage assurent généralement un faible compactage de la préforme fibreuse ; et l'installation comprenant de plus des moyens de commutation des moyens de pilotage entre les modes "débit contrôlé" et "pression contrôlée".

Dans l'installation ainsi définie, l'utilisation du mode "débit contrôlé" permet de fabriquer des pièces massives de grandes dimensions, présentant un taux de fibres supérieur à 58 %, alors que l'utilisation du mode "pression contrôlée" permet de fabriquer des pièces sandwich de grandes dimensions dans lesquelles les peaux présentent un taux volumique, de fibres inférieur à 54 %.

Dans une forme de réalisation préférentielle de l'invention, les moyens de pilotage agissent sur une vanne trois voies comportant une entrée reliée au pot d'alimentation, une première sortie reliée au vérin d'injection et une deuxième sortie reliée au moule. L'entrée de la vanne trois voies communique avec la première sortie dans le mode "débit contrôlé" et avec la deuxième sortie dans le mode "pression contrôlée".

Avantageusement, les moyens de pilotage agissent sur des moyens de pressurisation du pot d'alimentation, de façon telle qu'une pression constante est appliquée sur le pot en mode "débit contrôlé", alors qu'une pression régulée est appliquée sur le pot, en mode "pression contrôlée".

Pour permettre la fabrication de pièces de grandes dimensions tout en réduisant les risques pour que la résine commence à polymériser dans le pot d'alimentation (ce risque augmentant avec le volume ainsi qu'avec le diamètre), on utilise de préférence plusieurs pots d'alimentation, montés en parallèle dans une cuve reliée aux moyens de pressurisation. Chacun des pots d'alimentation est alors relié à tour de rôle à l'entrée de la vanne trois voies au travers d'une vanne commandée par les moyens de pilotage.

Le vérin d'injection est habituellement commandé par un moteur électrique auquel est associé un variateur de vitesse. Les moyens de pilotage agissent alors sur le variateur de vitesse, en mode "débit contrôlé", afin qu'un débit régulé de résine soit injecté dans le moule par le vérin.

Dans la forme de réalisation préférentielle de l'invention, un premier capteur de pression, délivrant un premier signal instantané, est placé à l'entrée du moule. Les moyens de pilotage comprennent alors un premier moyen comparateur, qui délivre un premier signal d'entrée représentatif de l'écart entre une consigne de pression maximale et le premier signal instantané, un deuxième moyen comparateur, qui délivre un deuxième signal d'entrée représentatif de la différence entre deux premiers signaux d'entrée consécutifs, et au moins une carte de régulation en logique floue qui délivre, en mode "débit contrôlé", un signal de régulation de débit, à partir des premier et deuxième signaux d'entrée.

De préférence, un deuxième capteur de pression est placé à la sortie de chaque vérin d'injection et délivre un deuxième signal instantané. Les moyens de pilotage comprennent un troisième moyen comparateur, qui délivre un troisième signal d'entrée représentatif de l'écart entre une pression maximale admissible à la sortie du vérin d'injection et le deuxième signal instantané, le signal de régulation de débit étant établi par la carte de régulation en logique floue, également à partir du troisième signal d'entrée.

Les moyens de pilotage comprennent alors des premiers moyens de limitation qui comparent le signal de régulation de débit à un signal de débit de référence, pour alimenter le variateur de vitesse par un signal de commande de débit égal au signal de débit de référence lorsque celui-ci est inférieur au signal de régulation de débit, et égal au signal de régulation de débit dans le cas contraire.

Par ailleurs, des moyens de mesure de débit sont placés entre la deuxième sortie de la vanne trois voies et le moule et délivrent un troisième signal instantané. Les moyens de pilotage comprennent un quatrième moyen comparateur qui délivre un quatrième signal d'entrée représentatif de l'écart entre une consigne de débit maximal et le troisième signal instantané et un cinquième moyen comparateur qui délivre un cinquième signal d'entrée représentatif de la différence entre deux quatrième signaux d'entrée consécutifs, la carte de régulation en logique floue délivrant, en mode "pression contrôlée" un signal de régulation de pression, à partir des quatrième et cinquième signaux d'entrée.

Les moyens de pilotage comprennent alors des deuxièmes moyens de limitation qui comparent le signal de régulation de pression à un signal de pression de référence, pour alimenter les moyens de pressurisation par un signal de commande de pression égal au signal de pression de référence lorsque celui- ci est inférieur au signal de régulation de pression, et égal à ce signal de régulation de pression dans le cas contraire.

Dans la forme de réalisation préférentielle de l'invention, deux vérins d'injection sont montés en parallèle entre une deuxième vanne trois voies comportant une entrée reliée au pot d'alimentation et une troisième vanne trois voies comportant une sortie reliée au moule. Les moyens de pilotage actionnent alors ces deuxième et troisième vannes trois voies, dans le mode "débit contrôlé", de façon telle que l'un des vérins d'injection soit relié au pot d'alimentation et isolé du moule alors que l'autre vérin d'injection est relié au moule et isolé du pot d'alimentation, et inversement. Cet agencement permet d'assurer l'injection de résine en continu dans le moule alternativement depuis l'un et l'autre des vérins. Elle est donc particulièrement adaptée à la fabrication de pièces de grandes dimensions et contribue à réduire les risques pour que la résine commence à polymériser dans les vérins.

Dans ce cas, un deuxième capteur de pression est placé à la sortie de chaque vérin d'injection et le troisième signal d'entrée injecté dans la carte de régulation en logique floue est représentatif de l'écart entre la pression maximale admissible à la sortie des vérins et le deuxième signal instantané délivré par le deuxième capteur de pression associé au vérin d'injection relié au moule.

### Brève description des dessins

On décrira à présent, à titre d'exemple non limitatif, une forme de réalisation préférentielle de l'invention, en se référant aux dessins annexés, dans lesquels :
- la figure 1 est un schéma synoptique représentant une installation de fabrication de pièces en matériau composite conforme à l'invention ;
- la figure 2 est schéma bloc qui illustre plus en détail le fonctionnement des moyens de pilotage lorsque l'installation illustrée sur la figure 1 est en mode "débit contrôlé" ;
- la figure 3 est un schéma bloc comparable à celui de la figure 2, illustrant le fonctionnement des moyens de pilotage dans le mode "pression contrôlée" ; et
- les figures 4A, 4B, 4C et 4D représentent les fonctions d'appartenance des trois grandeurs d'entrée et de la grandeur de sortie de la carte de régulation en logique floue utilisée dans les moyens de pilotage de l'installation, lorsque celle-ci est en mode "débit contrôlé".

### Exposé détaillé d'une forme de réalisation préférentielle.

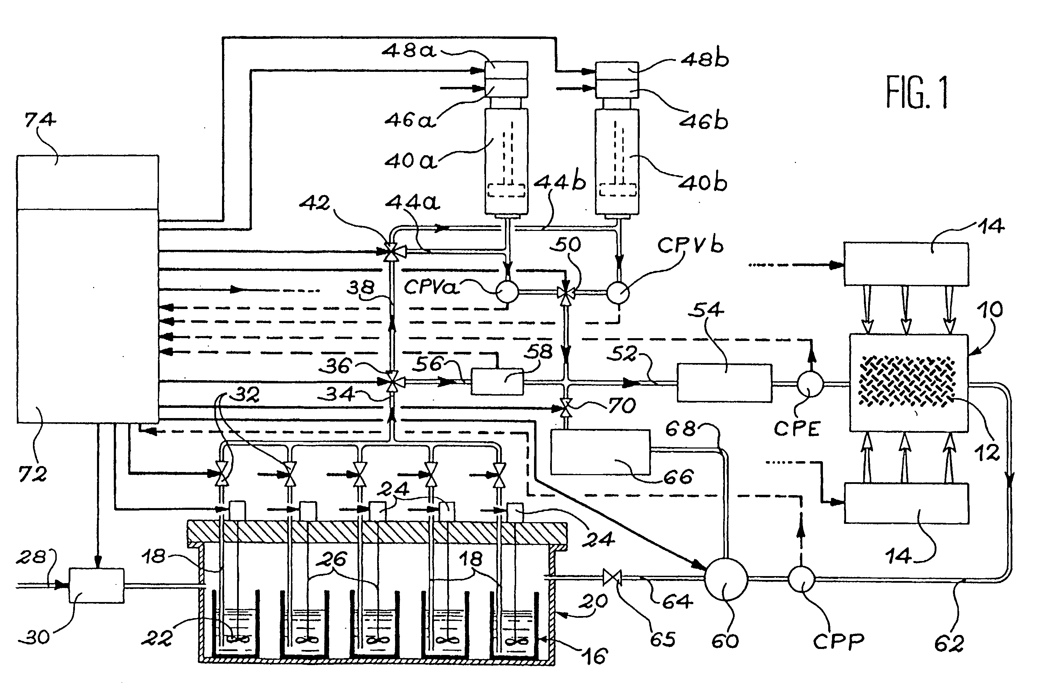

Dans sa forme de réalisation préférentielle illustrée schématiquement sur la figure 1, l'installation selon l'invention comporte un ou plusieurs moules 10, adaptés à la fabrication de pièces en matériau composite par moulage par transfert de résine. Chaque moule 10 présente une empreinte intérieure (non représentée) dont les formes et les dimensions correspondent au contour extérieur de la pièce à réaliser. Cette empreinte intérieure est destinée à recevoir une préforme fibreuse 12 formée de fibres organiques sèches, préassemblées. Chaque moule 10 est muni de moyens de chauffage (non représentés) conçus pour maintenir le moule à la température désirée lors de l'injection de la résine et pour soumettre cette dernière à un cycle de polymérisation lorsque l'injection est terminée.

Chaque moule 10 est également équipé de moyens de compactage symbolisés par les flèches 14 sur la figure 1. Ces moyens de compactage 14 sont conçus pour permettre d'appliquer sur la préforme fibreuse 12 un effort de compactage contrôlé, de valeur réglable. A titre d'exemple nullement limitatif, ces moyens de compactage 14 peuvent notamment comprendre une ou plusieurs vessies gonflables placées avec la préforme fibreuse 12 dans l'empreinte du moule 10, comme l'enseigne le document FR-A-2 720 028.

Pour faciliter la compréhension, on a représenté sur la figure 1 le cas le plus simple où l'installation comprend un seul moule 10. Lorsque plusieurs moules 10 sont utilisés, c'est-à-dire lorsque plusieurs pièces sont fabriquées simultanément, les moules sont agencés en parallèle afin que la résine soit injectée simultanément dans chacun d'entre eux.

Conformément à l'invention, l'installation peut fonctionner selon deux modes différents, qui lui permettent de fabriquer à volonté des pièces de caractéristiques différentes. Un premier mode, dit à "débit contrôlé", permet de fabriquer des pièces massives, de grandes dimensions, présentant un taux volumique de fibres élevé, supérieur à 58 %. Un deuxième mode, dit à "pression contrôlée", permet de fabriquer des pièces de grandes dimensions, généralement de type sandwich, présentant un taux volumique de fibres relativement faible, inférieur à 54 %. Lorsque plusieurs pièces sont fabriquées simultanément dans plusieurs moules 10, le fonctionnement de l'installation selon l'un ou l'autre de ces deux modes impose que toutes les pièces soient du même type (pièces massives à forte densité volumique de fibres, ou pièces sandwich à faible densité volumique de fibres).

Lorsque la ou les pièces fabriquées par l'installation sont des pièces massives à forte densité volumique de fibres, la préforme fibreuse 12 remplit pratiquement en totalité l'empreinte définie à l'intérieur de chacun des moules 10, comme l'illustre schématiquement la figure 1.

Au contraire, lorsque la ou les pièces fabriquées par l'installation sont du type sandwich, la préforme 12 comprend une âme centrale en nid d'abeilles ou en mousse, dont les deux faces sont recouvertes d'une préforme de fibres sèches. Des précautions sont alors prises (interposition d'un film étanche, ou autre) afin que la résine ne pénètre pas dans l'âme en nid d'abeilles ou en mousse, lors de son injection dans les préformes de fibres sèches destinées à former les peaux de la pièce.

Dans la forme de réalisation de l'invention illustrée sur la figure 1, qui concerne la fabrication de pièces de grandes dimensions, l'installation comprend plusieurs pots 16 d'alimentation en résine. Les pots 16 d'alimentation en résine sont généralement des récipients cylindriques, de faible volume (par exemple 5 ℓ) dans lequel plonge verticalement une canalisation de transfert 18 servant au transfert de la résine lorsqu'une pression est appliquée sur la surface de celle-ci.

L'utilisation de plusieurs pots 16 d'alimentation en résine est justifiée par le fait que les risques pour qu'un début de polymérisation de celle-ci commence à se produire dans le récipient qui la contient augmentent avec le volume et le diamètre de ce récipient.

Tous les pots 16 nécessaires à la fabrication d'une ou plusieurs pièces sont placés dans une même cuve 20. Cette cuve est fermée de manière étanche et apte à supporter une pression interne de quelques bars. Elle est équipée, par exemple sur son fond et autour des pots 16, de moyens (non représentés) de chauffage de la résine contenue dans les pots. Ces moyens de chauffage peuvent être de type quelconque, par exemple des résistances électriques.

De préférence, des moyens de pesée (non représentés) sont montés dans la cuve 20, pour mesurer individuellement la masse de chacun des pots 16.

Comme l'illustre schématiquement la figure 1, un agitateur 22 est placé à l'intérieur de chacun des pots 16 d'alimentation en résine. Chacun des agitateurs 22 est entraîné par un moteur électrique 24 placé au-dessus de la cuve 20, par l'intermédiaire d'un arbre vertical 26 qui traverse le plafond de la cuve 20.

Une canalisation d'air comprimé 28 débouche dans la cuve 20, afin de permettre sa pressurisation. Cette canalisation 28 est alimentée en air comprimé par une source d'air comprimé (non représentée) telle qu'une alimentation générale équipant l'usine dans laquelle est placée l'installation.

Un régulateur d'air 30, équipé d'une valve proportionnelle, est placé dans la canalisation d'air comprimé 28, de façon à permettre un pilotage précis et instantané de la pression appliquée sur les pots d'injection 16, à l'intérieur de la cuve 20. La canalisation 28 et son régulateur d'air 30 forment des moyens de pressurisation des pots d'injection 16.

A l'extérieur de la cuve 20, chacune des canalisations de transfert 18 est équipée d'une électrovanne 32 permettant d'utiliser à tour de rôle chacun des pots d'alimentation 16, lors de la mise en oeuvre de l'installation. En aval des électrovannes 32, toutes les canalisations de transfert 18 sont raccordées sur une canalisation unique 34 d'alimentation en résine.

La canalisation 34 d'alimentation en résine est connectée à l'entrée d'une première vanne trois voies 36, servant à modifier le chemin suivi par la résine dans l'installation, selon le mode de fonctionnement de celle-ci.

La vanne trois voies 36 comporte une première sortie sur laquelle est raccordée une canalisation 38 permettant d'alimenter à tour de rôle deux vérins 40a et 40b d'injection de résine, au travers d'une seconde vanne trois voies 42. Plus précisément, la canalisation 38 est raccordée à l'entrée de la vanne trois voies 42 et celle-ci comporte une première sortie, reliée à la chambre de pression du vérin 40a par une canalisation 44a, et une deuxième sortie, reliée à la chambre de pression du vérin 40b par une canalisation 44b.

Les deux vérins 40a et 40b sont identiques et chacun d'entre eux présente une capacité limitée, par exemple d'environ 10 ℓ. L'utilisation de vérins de faible capacité permet de réduire les risques pour que la résine commence à polymériser à l'intérieur de ces composants.

Comme on le verra plus en détail par la suite, les vérins 40a et 40b ne sont actionnés que lorsque l'installation fonctionne dans le mode "débit contrôlé". Chacun des vérins 40a et 40b est alors utilisé à tour de rôle pour injecter la résine dans le ou les moules 10. Plus précisément lorsque l'injection d'un moule nécessite une quantité de résine supérieure à 10 litres, le vérin qui n'est pas utilisé pour l'injection est en cours de remplissage, et inversement.

La commande de chacun des vérins 40a et 40b est assurée par un moteur électrique 46a, 46b équipé d'un variateur de vitesse 48a, 48b respectivement.

La canalisation 44a qui relie la première sortie de la vanne trois voies 42 au vérin 40a est également raccordée sur une première entrée d'une troisième vanne trois voies 50. De même, la canalisation 44b, qui relie la deuxième sortie de la vanne trois voies 42 au vérin 40b, est raccordée sur une deuxième entrée de la vanne trois voies 50. Cette dernière comporte une sortie unique qui est reliée à l'entrée du ou des moules 10 par une canalisation d'injection 52, au travers d'un échangeur de chaleur 54. L'échangeur de chaleur 54 permet d'amener la résine à la température désirée, à l'entrée du moule 20, par exemple par échange thermique à température régulée.

La première vanne trois voies 36 comporte une deuxième sortie qui est reliée directement à la canalisation d'injection 52, entre la vanne trois voies 50 et l'échangeur de chaleur 54, par une canalisation de dérivation 56. Cette canalisation de dérivation 56 est équipée d'un débitmètre 58, qui délivre un signal électrique instantané QE, représentatif de la valeur du débit d'écoulement de la résine dans la canalisation 56.

Une pompe à vide 60 est reliée à chacun des moules 10 par une canalisation d'aspiration 62 qui débouche dans chaque moule à l'opposé de la canalisation d'injection 52. Une canalisation 64 relie également un orifice d'aspiration de la pompe à vide 60 à la cuve 20. Elle permet de faire le vide dans cette dernière, lors de la phase initiale de débullage de la résine contenue dans les pots d'alimentation 16. La canalisation 64 est munie d'une vanne 65, normalement fermée lors du transfert de la résine.

La pompe à vide 60 peut aussi être utilisée pour purger les vérins 40a et 40b dans un bac de récupération interchangeable 66 lorsqu'un cycle d'injection en mode "débit contrôlé" est terminé. Une telle purge peut aussi être effectuée lorsqu'un début de polymérisation se produit accidentellement dans l'un ou l'autre des vérins. A cet effet, un orifice d'aspiration de la pompe 60 est relié à la canalisation d'injection 52, entre la troisième vanne trois voies 50 et l'échangeur de chaleur 54, par une canalisation de purge 68 dans laquelle est placé le bac 66. Cette canalisation de purge 68 est équipée d'une électrovanne 70, normalement fermée en amont du bac 66.

L'installation selon l'invention est équipée d'un premier capteur de pression, désigné par la référence CPE. Ce capteur CPE est placé dans la canalisation d'injection 52, entre l'échangeur de chaleur 54 et le ou les moules 10. Il délivre un signal électrique représentatif de la pression instantanée à l'entrée du ou des moules. Ce signal sera appelé par la suite le "premier signal instantané PE".

L'installation comprend également deux capteurs de pression CPVa et CPVb, qui sont placés respectivement dans les canalisations 44a et 44b, entre les vérins 40a et 40b et la troisième vanne trois voies 50. Chacun de ces capteurs de pression CPVa et CPVb délivre un signal électrique représentatif de la pression instantanée qui règne à la sortie des vérins 40a et 40b, respectivement. Ces signaux seront appelés par la suite les "deuxièmes signaux instantanés Pva et PVb".

L'installation illustrée sur la figure 1 comprend de plus un capteur de pression de vide CPP, placé dans la canalisation d'aspiration 62 immédiatement en amont de la pompe à vide 60. Ce capteur de pression CPP délivre un signal électrique représentatif de la pression instantanée qui règne à l'orifice d'aspiration de la pompe à vide 60.

L'installation conforme à l'invention comprend en outre des moyens de pilotage 72, auxquels sont associés des moyens de commutation 74. Les moyens de pilotage 72 reçoivent les signaux électriques délivrés par les différents capteurs et émetteurs qui équipent l'installation. Ainsi, comme on l'a illustré en traits discontinus sur la figure 1, les moyens de pilotage 72 reçoivent les signaux instantanés délivrés par le débitmètre 58 et par les capteurs CPE, CPVa, CPVb et CPP.

Par ailleurs, les moyens de pilotage 72 agissent sur les différents éléments actifs de l'installation, selon l'état des moyens de commutation 74. Ces actions sont illustrées schématiquement par des flèches en trait plein sur la figure 1. Les éléments actifs sur lesquels agissent notamment les moyens de pilotage 72 comprennent principalement les moyens de compactage 14, le régulateur d'air 30, la première vanne trois voies 36 et les variateurs de vitesse 48a et 48b. Ils comprennent aussi les moteurs 24 de commande des agitateurs, les électrovannes 32, la pompe à vide 60, et les deuxième et troisième vannes trois voies 42 et 50.

Les moyens de commutation 74 sont constituées par un organe de commutation apte à être actionné par un opérateur, afin de commuter les moyens de pilotage 72 entre le mode "débit contrôlé" et le mode "pression contrôlée", selon la nature des pièces à fabriquer.

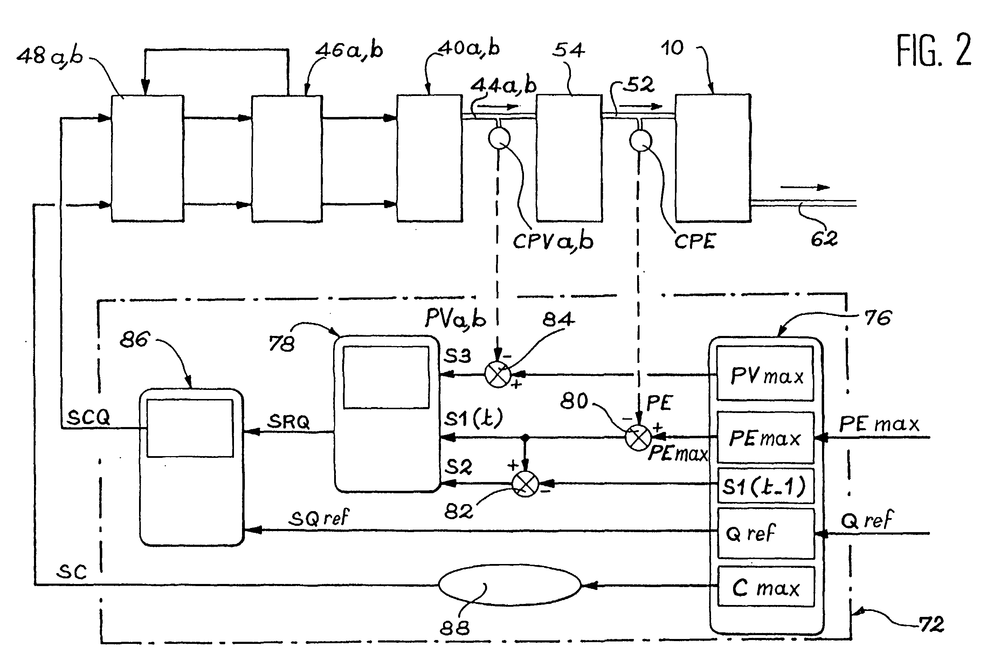

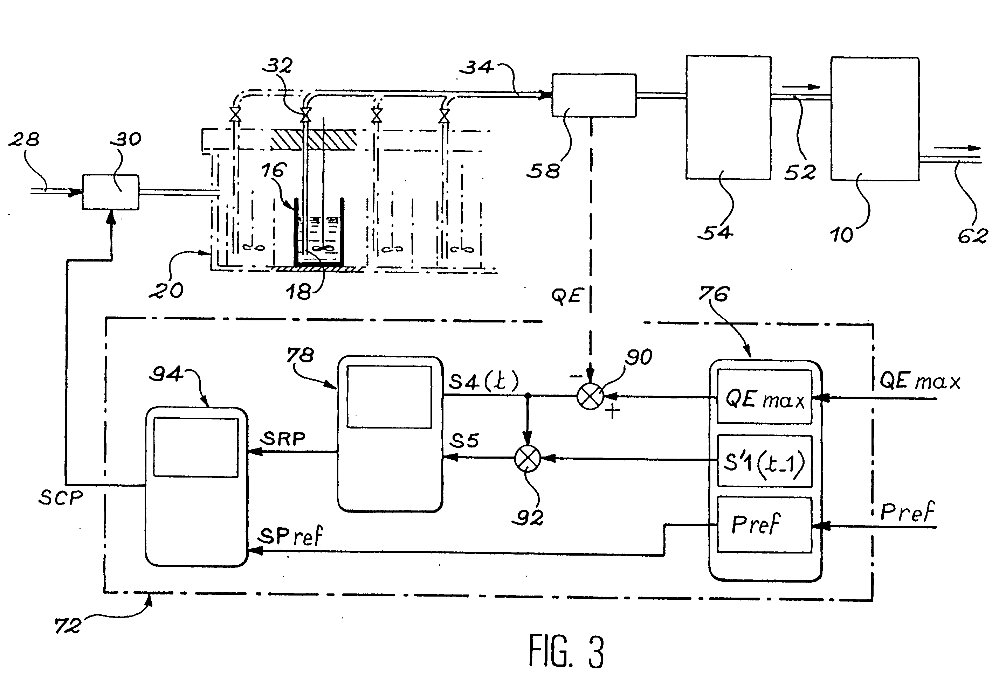

Les principaux éléments des moyens de pilotage 72 et leur fonctionnement, respectivement dans le mode "débit contrôlé" et dans le mode "pression contrôlée", vont à présent être décrit plus en détail en se référant successivement aux figures 2 et 3.

De façon plus précise, on a illustré sur la figure 2 l'action des moyens de pilotage 72 alternativement sur les variateurs de vitesse 48a et 48b des vérins 40a, 40b pour injecter la résine dans le moule 10 à un débit généralement constant lorsque l'installation est dans le mode "débit contrôlé". Par ailleurs, on a illustré sur la figure 3 l'action des moyens de pilotage 72 sur le régulateur d'air 30, afin d'injecter la résine directement dans le moule 10 à une pression généralement constante, lorsque l'installation est dans le mode "pression contrôlée".

Dans le mode "débit contrôlé" (figure 2), l'injection de la résine s'effectue alternativement par chacun des vérins 40a et 40b, comme on l'a déjà indiqué. Pour simplifier, les variateurs de vitesse 48a et 48b des vérins 40a, 40b, qui sont commandés à tour de rôle, ont été illustrés sous la forme d'un rectangle unique 48a,b.

Les moyens de pilotage 72 illustrés sur les figures 2 et 3 comprennent un automate 76, qui assure les fonctions de régulation en débit ou en pression, selon le mode de fonctionnement choisi, au travers d'une ou plusieurs carte(s) de régulation 78 en logique floue. Les différents paramètres de cette carte de régulation 78 peuvent être configurés à volonté, en agissant sur l'automate 76.

Comme on l'a illustré schématiquement sur les figures 2 et 3, l'automate 76 dispose d'organes d'entrée, tels que des roues codeuses, permettant d'introduire dans le système différentes consignes.

Dans le mode "débit contrôlé", (figure 2), une première consigne de pression maximale PEmax correspond à la pression maximale admissible à l'entrée du ou des moule(s) 10 utilisés. Cette consigne PEmax dépend essentiellement des caractéristiques des pièces que l'on désire fabriquer. Une deuxième consigne Qref correspond au débit de référence auquel on désire réguler l'injection de la résine. Ce débit de référence est choisi en fonction du volume du ou des moule(s) à remplir et en fonction du temps de gélification de la résine à la température d'injection choisie.

D'autres consignes sont stockées une fois pour toute dans l'automate 76, en fonction de caractéristiques intrinsèques à l'installation. Lors du fonctionnement de l'installation dans le mode "débit contrôlé" (figure 2), ces consignes comprennent notamment une consigne de pression PVmax qui correspond à la pression maximale admissible à la sortie de chacun des vérins 40a et 40b, compte tenu de leurs caractéristiques mécaniques. Elles comprennent aussi une consigne Cmax qui correspond au couple maximal autorisé pour chacun des moteurs électriques 46a et 46b.

Comme on l'a illustré schématiquement en 80 sur la figure 2, l'automate 76 calcule en temps réel un premier signal d'entrée S1(t) représentatif de la différence ou de l'écart ΔPE entre la consigne de pression maximale PEmax et le premier signal instantané PE délivré par le capteur CPE à l'entrée du moule 10. Ce premier signal d'entrée S1(t) constitue l'une des grandeurs d'entrée injectées dans la carte de régulation 78 en logique floue, dans le mode de fonctionnement à "débit contrôlé".

Comme on l'a illustré en 82 sur la figure 2, l'automate 76 élabore aussi en temps réel un deuxième signal d'entrée S2, représentatif de la différence ERPE entre deux signaux S1 consécutif, c'est-à-dire du taux de variation du premier signal d'entrée S1. Plus précisément, ce deuxième signal d'entrée S2 est égal à la différence entre le dernier signal d'entrée S1, calculé à l'instant t et le signal d'entrée S1 immédiatement antérieur, à l'instant t-1. Le deuxième signal d'entrée S2 constitue également une grandeur d'entrée injectée dans la carte de régulation 78 en logique floue, dans le mode de fonctionnement à "débit contrôlé".

Dans la forme de réalisation illustrée sur la figure 2, on injecte aussi dans la carte de régulation 78 en logique floue une troisième grandeur d'entrée, constituée par un troisième signal d'entrée S3. Ce troisième signal d'entrée S3 est représentatif de la différence ou de l'écart ΔPV entre la pression maximale PVmax admissible à la sortie des vérins 40a et 40b et la valeur instantanée de la pression Pva, PVb mesurée par le capteur CPVa et CPVb à la sortie du vérins 40a,40b en cours d'injection.

Le troisième signal d'entrée S3 est également élaboré par l'automate 76, comme on l'a illustré schématiquement en 84 sur la figure 2.

Lorsque l'installation fonctionne dans le mode "débit contrôlé", la carte de régulation 78 en logique floue élabore en permanence un signal SRQ de régulation de débit, à partir des trois signaux d'entrée S1, S2 et S3. Les caractéristiques essentielles des règles qui président à l'élaboration du signal SRQ de régulation de débit seront exposées brièvement par la suite, à titre d'exemple.

Dans la pratique, le signal SRQ de régulation de débit est un signal de vitesse, qui détermine à tout instant la vitesse à laquelle le moteur électrique 46a ou 46b du vérin en cours d'injection doit être actionné, pour satisfaire les règles contenues dans la carte de régulation 78 en logique floue.

Comme on l'a illustré en 86 sur la figure 2, lorsque l'installation fonctionne dans le mode "débit contrôlé", l'automate des moyens de pilotage 72 compare le signal SRQ de régulation de débit à un signal SQref de débit de référence, représentatif du débit de référence Qref préalablement rentré dans cet automate. Les moyens de pilotage 72 délivrent alors un signal de commande de débit SCQ, qui est égal au signal SQref tant que le signal SRQ de régulation de débit est supérieur ou égal à ce signal SQref, et égal au signal SRQ de régulation de débit lorsque ce signal SRQ est inférieur au signal SQref. Le signal de commande de débit SCQ est un signal de vitesse qui est injecté dans le variateur de vitesse 48a ou 48b du vérin 40a ou 40b en cours d'injection.

Comme le montre la figure 3, lorsque l'installation doit fonctionner dans le mode "pression contrôlée", on rentre dans l'automate 76 une consigne QEmax de débit maximal admissible à l'entrée du moule 10 et une consigne Pref qui correspond à la pression de référence à laquelle on désire réguler l'injection.

Comme on l'a illustré schématiquement en 90 sur la figure 3, l'automate 76 calcule en temps réel un quatrième signal d'entrée S4(t), représentatif de la différence ou de l'écart ΔQE entre la consigne de débit maximale QEmax et le signal instantané QE délivré par le débitmètre 58. Ce quatrième signal d'entrée S4(t) constitue l'une des grandeurs d'entrée injectées dans la carte de régulation 78 en logique floue, dans le mode de fonctionnement à "pression contrôlée".

L'automate 76 élabore aussi en temps réel, comme représenté en 92 sur la figure 3, un cinquième signal d'entrée S5, représentatif de la différence ERQE entre deux signaux S4 consécutifs, c'est-à-dire du taux de variation du quatrième signal d'entrée S4. Plus précisément, ce cinquième signal d'entrée S5 est égal à la différence entre le dernier signal d'entrée S4, calculé à l'instant t, et le signal d'entrée S4 immédiatement antérieur, à l'instant t-1. Le cinquième signal d'entrée S5 constitue également une grandeur d'entrée injectée dans la carte de régulation 78 en logique floue, dans le mode de fonctionnement à "pression contrôlée".

Dans ce mode "pression contrôlée", la carte de régulation 78 en logique floue élabore en permanence un signal SRP de régulation de pression, à partir des deux signaux d'entrée S4 et S5. Ce signal SRP détermine à tout instant la pression qui doit être appliquée sur le pot d'alimentation 16 en cours d'injection, pour satisfaire les règles contenues dans la carte de régulation 78 en logique floue.

Comme on l'a également illustré en 94 sur la figure 3, lorsque l'installation fonctionne dans le mode "pression contrôlée" l'automate des moyens de pilotage 72 compare le signal SRP de régulation de débit à un signal SPref représentatif de la pression de référence Pref préalablement rentrée dans cet automate. Les moyens de pilotage 72 délivrent alors un signal de commande de pression SCP qui est égal au signal SPref tant que le signal SRP de régulation de pression est supérieur ou égal à ce signal SPref, et égal au signal SRP de régulation de pression lorsque ce signal SRP est inférieur au signal SPref. Le signal de commande de pression SCP est injecté dans le régulateur d'air 30 de façon à réguler l'ouverture de la valve proportionnelle qu'il contient.

Lorsque l'opérateur a raccordé un ou plusieurs moule(s) 10 entre les canalisations 52 et 62 (figure 1), il opte soit pour le mode "débit contrôlé", soit pour le mode "pression contrôlée", selon les caractéristiques des pièces à fabriquer. Ainsi, comme on l'a déjà noté, le mode "débit contrôlé" est choisi pour la fabrication de pièces de grandes dimensions présentant un taux volumique de fibres élevé, typiquement supérieur à 58 %. Au contraire, le mode "pression contrôlée" est choisi de préférence pour la fabrication de pièces sandwich dont les peaux présentent un taux volumique de fibres relativement faible, typiquement inférieur à 54 % ceci afin de limiter les efforts, résultant de la pression d'injection, sur l'âme en mousse ou en Nida. Les moyens de commutation 74 sont actionnés pour placer l'installation dans le mode choisi.

Lorsque le mode "débit contrôlé" est sélectionné, la première vanne trois voies 36 est placée automatiquement dans son état dans lequel la canalisation 34 communique avec la canalisation 38 d'alimentation des vérins. Par ailleurs, la valve proportionnelle du régulateur d'air 30 est placée dans son état d'ouverture maximale, correspondant à une pression de quelques bars. Enfin, les moyens de pilotage 72 agissent sur les moyens de compactage 14 de façon à assurer un fort compactage de la préforme fibreuse 12, propre à obtenir un taux volumique de fibres supérieur à 58 %, lorsque ces moyens de compactage 14 sont actionnés.

La mise en oeuvre de l'installation dans ce mode "débit contrôlé" a également pour effet d'ouvrir initialement au moins l'une des électrovannes 32, en maintenant les autres électrovannes 32 fermées. Parallèlement, les deuxième et troisième vannes trois voies 42 et 50 sont actionnées de façon telle que l'un des vérins, par exemple le vérin 40a, soit relié initialement au pot d'alimentation 16 correspondant à l'électrovanne 32 ouverte, tout en restant isolé du moule 10, alors que l'autre vérin, tel que le vérin 40b, soit au contraire isolé des pots d'alimentation 16 et mis en communication avec le moule 10.

Au cours d'une phase préliminaire du fonctionnement, le vérin tel que 40a, qui est relié initialement à l'un des pots 16 se remplit de résine sous l'action de l'air comprimé admis dans la cuve 20 par la canalisation 28. Compte tenu des volumes relatifs des pots d'alimentation 16 et des vérins 40a et 40b, le remplissage du vérin 40a est généralement assuré en utilisant approximativement le contenu de deux pots 16. Cela peut être obtenu soit en ouvrant simultanément deux des électrovannes 32, soit en ouvrant d'abord l'une de ces électrovannes, puis l'autre, après avoir refermé la première.

Lorsque cette étape préliminaire est terminée, les moyens de pilotage 72 commandent simultanément l'inversion des états des deuxième et troisième vannes trois voies 42 et 50. Par conséquent, le vérin tel que 40a dont le remplissage vient d'être effectué se trouve alors isolé des pots d'alimentation 16 et relié au moule 10. Inversement, l'autre vérin, tel que 40b, est à son tour relié à un ou plusieurs des pots d'alimentation 16 afin d'être rempli.

Dès que l'injection de la résine dans le moule 10 commence, à partir de l'un des vérins tel que 40a dans l'exemple décrit, la vitesse de son moteur électrique 46a est régulée en permanence par son variateur de vitesse 48a, en fonction du signal de commande de débit SCQ délivré par les moyens de pilotage 72. Ainsi, le débit d'injection de la résine dans le moule 10 reste constant et égal au débit de consigne Qref tant que le signal SRQ de régulation de débit est supérieur au signal SQref représentatif de ce débit de consigne. En revanche, lorsque la valeur du signal SRQ de régulation de débit est inférieure à celle du signal SQref, la vitesse du moteur électrique 46a est régulée de façon telle que l'injection de la résine dans le moule 10 s'effectue à un débit q inférieur au débit de consigne Q. Le débit d'injection q évolue alors selon la valeur du signal SRQ. Comme on le verra ultérieurement, ce signal SRQ de régulation de débit est déterminé par la carte de régulation 46 en logique floue, principalement à partir de la pression instantanée PE mesurée à l'entrée du moule 10.

Dans la pratique, il est à noter que la pression instantanée PE à l'entrée du moule augmente progressivement au fur et à mesure de l'injection jusqu'à ce qu'elle atteigne la consigne de pression PEmax. Cette augmentation de la pression est due au fait que la résistance à l'avancement de la résine augmente au fur et à mesure de l'avancée du front de résine dans le moule, en raison de la présence de la préforme 12 fortement compactée. Tant que la consigne de pression PEmax n'est pas atteinte, l'injection se fait à débit constant.

Lorsque la consigne de pression PEmax est atteinte, le retour à une injection à débit constant ne peut être obtenu qu'à la condition qu'au moins une autre caractéristique de l'injection soit modifiée. Dans l'installation décrite, cela est obtenu en relâchant provisoirement l'effort de compactage appliqué sur la préforme 12 par les moyens de compactage 14. Du fait de ce relâchement, la pression instantanée PE à l'entrée du moule descend immédiatement en dessous de la consigne de pression PEmax. Par conséquent, le débit d'injection de la résine dans le moule est immédiatement augmenté pour revenir à la valeur de consigne Qref, sous l'action des moyens de pilotage 72.

Les moyens de compactage 14 sont alors actionnés afin d'assurer à nouveau un fort compactage de la préforme 12.

Lors de la mise en oeuvre de l'installation dans le mode "débit contrôlé", l'injection de la résine dans le ou les moule(s) est effectuée à tour de rôle par les vérins 40a et 40b, sous l'effet du changement d'état des deuxième et troisième vannes trois voies 42 et 50, commandé automatiquement par les moyens de pilotage 72 dès que l'un des vérins est pratiquement vide. Cette information est communiquée automatiquement aux moyens de pilotage par des capteurs (non représentés). Dans les limites du temps de gel de la résine, des pièces de grandes dimensions peuvent ainsi être fabriquées sans avoir recours à des vérins de grandes dimensions, particulièrement coûteux et susceptibles d'induire une polymérisation prématurée de la résine.

Ce mode de fonctionnement est rendu possible par le fait que l'injection de la résine dans le moule par l'un des vérins s'accompagne simultanément du remplissage de l'autre vérin depuis un ou plusieurs des pots d'alimentation 16.

Pour conclure la description du fonctionnement de l'installation en mode "débit contrôlé", on observera en référence à la figure 2 que les variateurs de vitesse 48a et 48b reçoivent également un signal SC, représentatif du couple maximal Cmax autorisé pour chacun des moteurs électriques 46a et 46b. Ce signal SC est dérivé directement de la valeur du couple maximal Cmax entrée dans l'automate des moyens de pilotage 72, après passage dans un circuit 88 de mise à l'échelle.

Lorsque la nature des pièces à fabriquer conduit l'opérateur à placer l'installation dans le mode de fonctionnement à "pression contrôlée", en agissant sur les moyens de commutation 74, la première vanne trois voies 36 est placée automatiquement dans son deuxième état, dans lequel la canalisation 34 communique directement avec la canalisation de dérivation 56, qui l'a relie au moule 10 sans passer par les vérins. Ces derniers sont alors hors circuit.

Dans ce mode "pression contrôlée", l'effort de compactage susceptible d'être appliqué sur la préforme fibreuse 12 par les moyens de compactage 14 est réglé automatiquement à une valeur relativement faible, correspondant à un taux volumique de fibres inférieur à 54 %. Par ailleurs, les moyens de pilotage 72 sont réglés de façon à commander l'ouverture de la valve proportionnelle intégrée dans le régulateur d'air 30, afin de maintenir généralement constante la pression de la résine à l'entrée du moule 10.

Dans ce mode de fonctionnement à "pression contrôlée", la résine est injectée directement en continu dans le ou les moules 10, successivement depuis un ou plusieurs des pots d'alimentation 16, par une ouverture successive des électrovannes 32. La pression d'injection est déterminée par la valeur de la pression qui règne dans la cuve 20, c'est-à-dire par la plus ou moins grande ouverture de la valve proportionnelle du régulateur d'air 30.

Afin d'éviter tout risque d'interruption dans l'injection de la résine, lors du basculement d'un pot 16 à un autre par actionnement des électrovannes 32, la commande de celles-ci est effectuée automatiquement par les moyens de pilotage 72 en fonction des informations fournies, par exemple, par les moyens de pesée (non représentés) associés aux pots 16, ou par le débitmètre 58, avant que les pots ne soient totalement vides.

Lorsque la résine est injectée dans le ou les moule(s) 10 selon ce mode "pression contrôlée", la valve proportionnelle du régulateur d'air 30 est régulée en permanence par le signal de commande de pression SCP délivré par les moyens de pilotage 72. La pression d'injection de la résine dans le ou les moule(s) 10 reste ainsi normalement constante et égale à la pression de consigne Pref, tant que le signal SRP de régulation de pression est supérieur au signal SPref représentatif de cette pression de consigne. En revanche, les moyens de pilotage 72 actionnent la valve proportionnelle du régulateur d'air 30 de façon telle que l'injection de la résine dans le ou les moule(s) 10 s'effectue à une pression p inférieure à la pression de consigne Pref, lorsque la valeur du signal SRP de régulation de pression est inférieure à celle du signal SPref. La pression d'injection p évolue alors selon la valeur du signal SRP.

Dans ce mode de régulation à "pression contrôlée", le signal SRP de régulation de pression est déterminé par la carte de régulation 78 en logique floue uniquement à partir de la valeur instantanée QE du débit, mesurée par le débitmètre 30 à l'entrée du ou des moule(s) 10.

Les signaux de régulation de débit SRQ et de régulation de pression SRP sont élaborés dans la ou les carte(s) de régulation 78 en logique floue de manière pratiquement identique. La différence essentielle réside dans le fait que le signal SRQ de régulation de débit est élaboré à partir des trois signaux d'entrée S1, S2 et S3, alors que le signal SRP de régulation de pression n'est élaboré qu'à partir des deux signaux d'entrée S4 et S5. La description qui va à présent être faite afin d'expliquer le fonctionnement de la carte de régulation 78 en logique floue, pour déterminer le signal SRQ de régulation de débit à partir des trois signaux d'entrée S1, S2 et S3, peut donc être extrapolée sans difficulté pour comprendre l'élaboration du signal SRP de régulation de pression par la carte de régulation 78.

Dans le cas du fonctionnement à "débit contrôlé", le recours à la logique floue est justifié par la nécessité de gérer simultanément deux régulations de pression (PE à l'entrée du moule et PV à la sortie des vérins). Quel que soit le mode de fonctionnement, le recours à la logique floue a aussi pour intérêt de permettre le contrôle de l'injection sans qu'il soit nécessaire de connaître la modélisation mathématique de chaque élément (variateurs de vitesse, moteurs électrique, réducteurs associés aux moteurs, vérins, tuyauteries, échangeur, régulateur d'air, pots d'alimentation, vannes, résine, etc.).

Le traitement en logique floue, effectué dans la ou les carte(s) de régulation 78, peut schématiquement être décomposé en trois étapes :
- transformation de chacun des signaux d'entrée instantanés S1, S2, S3 (ou S4, SR en mode "pression contrôlée") en une partie floue (étape d'entrée) ;
- transformation des parties floues dérivées des signaux d'entrée en une partie floue représentative du signal de sortie (étape d'inférence) ; et
- transformation de la partie floue issue de l'étape d'inférence en un signal de sortie instantané SRQ (ou SRP en mode "pression contrôlée") (étape de sortie).

Ce traitement permet de modéliser le savoir faire des opérateurs utilisant habituellement les installations de moulage par transfert de résine. Concrètement, cette modélisation est obtenue sur la base de règles logiques, qui décrivent en termes flous les conditions possibles du système et les actions appropriées pour ces conditions. Ces règles logiques correspondent à l'étape d'inférence.

Les transformations effectuées lors des étapes d'entrée et de sortie sont assurées en affectant des fonctions d'appartenance à chacune des grandeurs d'entrée et à la grandeur de sortie. Ces fonctions d'appartenance sont des ensembles flous, définis mathématiquement par des fonctions généralement triangulaires ou trapézoïdales.

Ainsi, dans la carte de régulation 78 en logique floue, la valeur instantanée de chacun des signaux S1, S2 et S3 (ou S4 et SR en mode "pression contrôlée") est comparée à des fonctions d'appartenance définies préalablement pour chacune des grandeurs d'entrée ΔPE, ERPE et ΔPV (ou ΔQE et ERQE en mode "pression contrôlée").

Dans la forme de réalisation décrite, les fonctions d'appartenance affectées à l'écart ΔPE (ou ΔQE en mode "pression contrôlée") entre la consigne de pression Pemax (ou de débit QEmax) et la pression instantanée PE (ou le débit instantané QE) à l'entrée du ou des moules 10 sont : négatif grand (Ng), négatif moyen (Nm), négatif petit (Np), zéro (Ze), positif petit (Pp), positif moyen (Pm) et positif grand (Pg).

De façon comparable, les fonctions d'appartenance affectées au taux de variation ERPE (ou ERQE en mode "pression contrôlée"), qui correspond à la différence entre deux premiers signaux S1 consécutifs (ou entre deux quatrième signaux S4 consécutifs) sont : négatif grand (Ng), négatif moyen (Nm), négatif petit (Np), zéro (Ze), positif petit (Pp), positif moyen (Pm) et positif grand (Pg).

Enfin, la seule fonction d'appartenance affectée à la grandeur d'entrée ΔPV, représentative de la différence entre la pression maximale PVmax admissible à la sortie des vérins 40a, 40b et la pression instantanée PV mesurée à la sortie de ce vérin, est : mauvais (cette grandeur d'entrée n'a pas d'équivalent en mode "pression contrôlée").

Dans la carte de régulation 78 en logique floue, on affecte également des fonctions d'appartenance à la grandeur de sortie, constituée dans ce cas par les changements ΔSRQ de la vitesse de rotation du moteur électrique 46a ou 46b (ou ΔSRP de l'ouverture de la valve proportionnelle du régulateur d'air 30, en mode "pression contrôlée"), représentée par le signal SRQ de régulation de débit (ou SRP de régulation de pression). Dans la forme de réalisation décrite, les fonctions affectées à la grandeur de sortie sont : négatif grand (Ng), négatif moyen (Nm), négatif petit (Np), zéro (Ze), positif petit (Pp), positif moyen (Pm) et positif grand (Pg).

Les fonctions d'appartenance des grandeurs d'entrée sont reliées aux fonctions d'appartenance de la grandeur de sortie par une table de règles. Si l'on ne tient pas compte de l'influence de la grandeur d'entrée ΔPV (qui n'intervient en pratique que très rarement), cette table de règles a deux entrées (ΔPE et ERPE) et une sortie (ΔSRQ). Cette table de règles est établie expérimentalement. A titre d'exemple, elle peut prendre la forme illustrée ci-dessous :

| TABLE DE REGLES | | | | | | | | |
|---|---|---|---|---|---|---|---|---|
| | | ERPE | | | | | | |
| ΔSRQ | | Ng | Nm | Np | Ze | Pp | Pm | Pg |
| ΔPE | Ng | Ng | Ng | Ng | Ng | Ng | Ng | Ng |
| | Nm | Ng | Ng | Ng | Ng | Nm | Nm | Nm |
| | Np | Nm | Nm | Nm | Np | Ze | Ze | Ze |
| | Ze | Ze | Ze | Ze | Ze | Ze | Ze | Ze |
| | Pp | Ze | Ze | Ze | Pp | Pm | Pm | Pm |
| | Pm | Pm | Pm | Pm | Pg | Pg | Pg | Pg |
| | Pg | Pg | Pg | Pg | Pg | Pg | Pg | Pg |

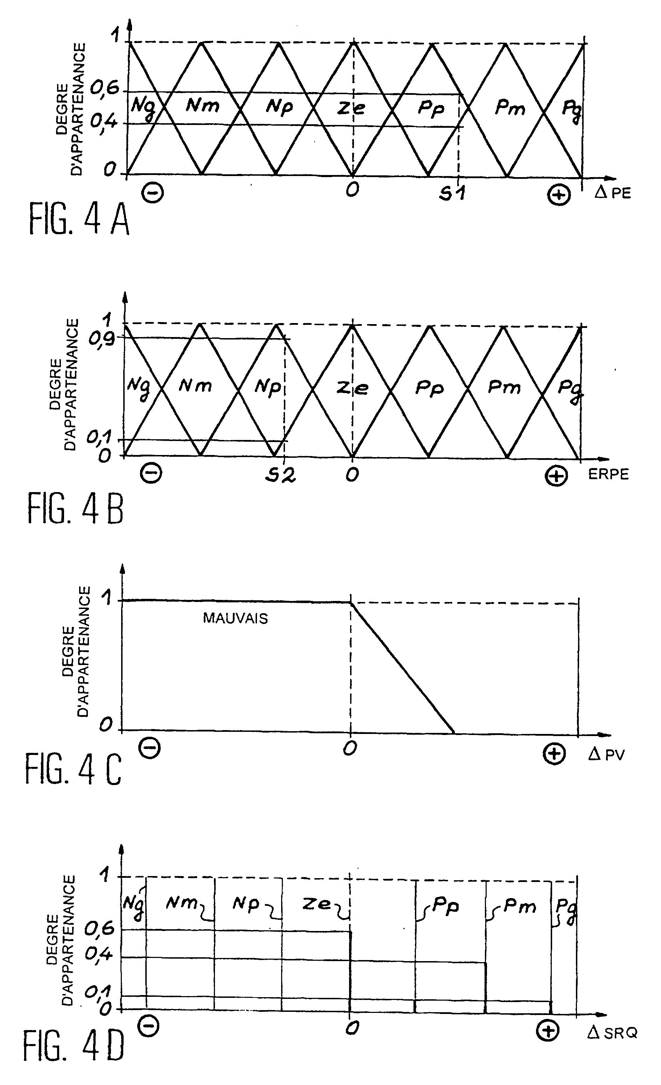

Par ailleurs, la seule règle qui relie la grandeur d'entrée ΔPV à la grandeur de sortie ΔSRQ est :
- si ΔPV = MAUVAIS, alors ΔSRQ = Ng.
   Cette règle est prioritaire, c'est-à-dire qu'elle s'impose quelles que soient les valeurs des autres grandeurs d'entrée.
   Les fonctions d'appartenance affectées à l'écart ΔPE, au taux de variation ERPE, à l'écart ΔPV et aux changements ΔSRQ à apporter à la vitesse de rotation du moteur électrique 46a ou 46b sont illustrées respectivement sur les figures 4A, 4B, 4C et 4D.
   Dans le cas des grandeurs d'entrée ΔPE et ERPE (figures 4A et 4B), les fonctions d'appartenance ont, par exemple, la forme de triangles isocèles identiques, qui se recouvrent partiellement et dont les bases sont situées sur l'axe des abscisses et régulièrement décalées les unes par rapport aux autres. La valeur instantanée de la grandeur correspondante est portée ou lue sur l'axe des abscisses, selon qu'il s'agit des grandeurs d'entrée ou de la grandeur de sortie. L'axe des ordonnées détermine le degré d'appartenance de la grandeur avec chacune des fonctions, la hauteur des triangles isocèles représentatifs de ces fonctions correspondant à l'unité. Les dimensions et écartement des bases des triangles sont déterminés par l'expérience.
   Dans le cas de la grandeur d'entrée ΔPV (figure 4C), la fonction d'appartenance "MAUVAIS" a la forme d'un trapèze rectangle dont la hauteur correspond à l'unité.
   Enfin, comme l'illustre la figure 4D, les fonctions d'appartenance correspondant à la grandeur de sortie ΔSRQ sont des segments de droite régulièrement espacés et parallèles à l'axe des ordonnées. La longueur de chaque segment est égale à l'unité. Chaque segment correspond donc à une augmentation (sens +) ou une réduction (sens -) de vitesse bien déterminée.
   Tous les paramètres correspondant à la table de règles et aux fonctions d'appartenance sont introduits une fois pour toute dans la carte de régulation 78 en logique floue.
   En supposant la pression instantanée PV à la sortie du vérin 40a ou 40b sensiblement inférieure à la pression maximale admissible PVmax, comme c'est habituellement le cas, la carte de régulation 78 en logique floue détermine le changement ΔSRQ à apporter au signal SRQ de régulation de débit à partir des valeurs instantanées des grandeurs d'entrée ΔPE et ERPE données par les signaux S1 et S2.
   Ainsi, la carte de régulation 78 en logique floue établit, à l'entrée, le degré de conformité de chacune des grandeurs d'entrée ΔPE et ERPE avec les fonctions d'appartenance se rapportant à ces grandeurs.
   Plus précisément et à titre d'exemple, on supposera que la valeur du premier signal S1, reportée sur l'axe des abscisses des fonctions d'appartenance se rapportant à l'écart ΔPE, se trouve à la fois dans les triangles isocèles représentatifs des fonctions d'appartenance Pm et Pp associés à cette grandeur (figure 4A). Cela signifie que l'écart entre la consigne de pression PEmax et la pression instantanée PE mesurée à l'entrée du ou des moules est positif et que son amplitude est entre moyen et petit. Le degré d'appartenance 0,4 et 0,6 de cet écart ΔPE respectivement à chacune des fonctions d'appartenance Pm et Pp est donné par l'ordonnée de l'intersection des côtés du triangle qui la représente avec la hauteur issue du point représentatif du premier signal.
   On supposera par ailleurs, toujours à titre d'exemple, que la valeur du deuxième signal S2, reportée sur l'axe des abscisses des fonctions d'appartenance se rapportant aux taux de variation ERPE du premier signal, se trouve à la fois dans les triangles isocèles représentatifs des fonctions d'appartenance Ze et Np associées à cette grandeur (figure 4B). Cela signifie que la pression à l'entrée du ou des moules diminue de façon extrêmement faible. Le degré d'appartenance 0,1 et 0,9 du taux de variation ERPE respectivement à chacune de ces fonctions d'appartenance Ze et Np est obtenu comme pour l'écart ΔPE.
   Dans les hypothèses qui précèdent, quatre des règles de la table de règles donnée précédemment à titre d'exemple sont concernées :
- si ΔPE = Pm et ERPE = Ze, alors ΔSRQ = Pg (1ère règle) ;
- si ΔPE = Pm et ERPE = Np, alors ΔSRQ = Pm (2ème règle) ;
- si ΔPE = Pp et ERPE = Ze, alors ΔSRQ = Pp (3ème règle); et
- si ΔPE = Pp et ERPE = Np, alors ΔSRQ = Ze (4ème règle).

Pour chacune de ces quatre règles, la carte de régulation 78 en logique floue compare les degrés de conformité de chacune des grandeurs d'entrée ΔPE et ERPE avec les fonctions d'appartenance concernées par la règle considérée, et le degré de conformité le plus faible est retenu.

Ainsi, dans le cas de la première règle ci-dessus, les fonctions d'appartenance concernées sont la fonction Pm pour l'écart ΔPE et la fonction Ze pour le taux de variation ERPE.

Dans le cas des signaux S1 et S2 dont les valeurs ont été portées à titre d'exemple sur les figures 3A et 3B, les degrés de conformité correspondant à ces fonctions d'appartenance Pm et Ze sont respectivement 0,4 et 0,1. C'est donc cette dernière valeur de 0,1 qui est retenue. La même démarche conduit à retenir respectivement pour les deuxième, troisième et quatrième règles des degrés de conformité de 0,4, de 0,1 et de 0,6.

Le degré de conformité ainsi retenu pour chacune des règles considérées est appliqué à la fonction d'appartenance correspondant à cette règle, pour la grandeur de sortie ΔSRQ.

Ainsi et comme on l'a illustré sur la figure 4D, cela conduit à affecter respectivement aux fonctions d'appartenance Pg, Pm, Pp et Ze de la grandeur de sortie ΔSRQ des degrés de conformité de 0,1, de 0,4, de 0,1 et de 0,6, dans le cas des signaux S1 et S2 portés à titre d'exemple sur les figures 4A et 4B.

A la sortie, la carte de régulation 78 en logique floue détermine la position du centre de gravité de l'ensemble des fonctions d'appartenance Pg, Pm, Pp, et Ze ainsi pondérées par les degrés de conformités de 0,1, de 0,4, de 0,1 et de 0,6. Elle modifie alors la précédente valeur du signal SRQ de régulation de débit en déterminant le changement ΔSRQ à apporter à cette valeur à partir de l'abscisse de ce centre de gravité. Dans l'exemple considéré, le signal SRQ augmente d'une valeur légèrement supérieure à celle qui correspond à la fonction d'appartenance Pp.

La même carte de régulation 78 en logique floue, ou une autre carte si la capacité de la première est insuffisante, détermine, sur la base d'une table de règles reliant les deux grandeurs d'entrée ERQE et ΔQE à la grandeur de sortie ΔSRP, les changements à apporter au signal SRP de régulation de pression, lorsque l'installation fonctionne en mode "pression contrôlée".

Plus précisément, la table de règles est identique ou comparable à celle qui relie les deux grandeurs d'entrée ERPE et ΔPE à la grandeur de sortie ΔSRQ en mode "débit contrôlé". De même, les fonctions d'appartenance affectées à l'écart ΔQE, au taux de variation ERQE et aux changement ΔSRP à apporter au signal de régulation de pression sont identiques ou comparables à celles qui sont affectées aux grandeurs ΔPE (figure 4A), ERPE (figure 4B) et ΔSRQ (figure 4D).

Bien entendu, l'invention n'est pas limitée à la forme de réalisation qui vient d'être décrite en se référant aux figures. Ainsi, dans le cas où l'installation comporte des vérins d'injection aptes à supporter toutes les pressions susceptibles d'être atteintes dans les gammes de fabrication concernées, la prise en compte de la pression instantanée à la sortie des vérins n'est pas nécessaire, lors du fonctionnement en mode "débit contrôlé".

## Revendications

1. Installation de fabrication de pièces en matériau composite, par moulage par transfert de résine, ladite installation comprenant :
- au moins un moule (10) apte à recevoir une préforme fibreuse (12) ;
- des moyens (14) de compactage de la préforme dans le moule ;
- au moins un vérin (40a,40b) d'injection de résine dans le moule ;
- au moins un pot (16) d'alimentation en résine ;
- des moyens de pilotage aptes à faire fonctionner l'installation dans un mode "débit contrôlé", dans lequel la résine est transférée du pot d'alimentation (16) au vérin d'injection (40a,40b), puis injectée dans le moule par ce vérin, et dans lequel les moyens de compactage (14) assurent généralement un fort compactage de la préforme fibreuse (12), les moyens de pilotage injectant la résine dans le moule à un débit généralement constant,
ladite installation étant **caractérisée en ce que** les moyens de pilotage sont également aptes à faire fonctionner l'installation dans un mode "pression contrôlée", dans lequel la résine est injectée directement dans le moule par le pot d'alimentation (16), à une pression généralement constante, et dans lequel les moyens de compactage (14) assurent généralement un faible compactage de la préforme fibreuse (12) ; et l'installation comprenant de plus des moyens de commutation (74) des moyens de pilotage entre les modes "débit contrôlé" et "pression contrôlée".

2. Installation selon la revendication 1, dans laquelle les moyens de pilotage agissent sur une vanne trois voies (36) comportant une entrée reliée au pot d'alimentation (16), une première sortie reliée au vérin d'injection (40a,40b) et une deuxième sortie reliée au moule (10), l'entrée de la vanne trois voies (36) communiquant avec la première sortie dans le mode "débit contrôlé" et avec la deuxième sortie dans le mode "pression contrôlée".

3. Installation selon l'une quelconque des revendications 1 et 2, dans laquelle les moyens de pilotage (72) agissent sur des moyens de pressurisation (28,30) du pot d'alimentation, de façon telle qu'une pression constante est appliquée sur le pot en mode "débit contrôlé", alors qu'une pression régulée est appliquée sur le pot, en mode "pression contrôlée".

4. Installation selon les revendications 2 et 3 combinées, dans laquelle plusieurs pots d'alimentation (16), sont montés en parallèle dans une cuve (20) reliée auxdits moyens de pressurisation (28, 30), chacun des pots d'alimentation (16) étant relié à tour de rôle à l'entrée de la vanne trois voies (36) au travers d'une vanne (32) commandée par les moyens de pilotage (72).

5. Installation selon l'une quelconque des revendications précédentes, dans laquelle le vérin d'injection (40a,40b) est commandé par un moteur électrique (46a,46b) auquel est associé un variateur de vitesse (48a,48b), et les moyens de pilotage (72) agissent sur le variateur de vitesse (48a,48b), en mode "débit contrôlé", afin qu'un débit régulé de résine soit injecté dans le moule (10) par le vérin.

6. Installation selon la revendication 5, dans laquelle un premier capteur de pression (CPE) est placé à l'entrée du moule et délivre un premier signal instantané (PE) et dans laquelle les moyens de pilotage (72) comprennent un premier moyen comparateur (80), qui délivre un premier signal d'entrée (S1) représentatif de l'écart entre une consigne de pression maximale (Pemax) et le premier signal instantané (PE), un deuxième moyen comparateur (82), qui délivre un deuxième signal d'entrée (S2) représentatif de la différence entre deux premiers signaux d'entrée consécutifs, et au moins une carte de régulation (78) en logique floue qui délivre, en mode "débit contrôlé", un signal de régulation de débit (SRQ), à partir des premier et deuxième signaux d'entrée (S1,S2).

7. Installation selon la revendication 6, dans laquelle un deuxième capteur de pression (CPVa,CPVb) est placé à la sortie de chaque vérin d'injection (40a,40b) et délivre un deuxième signal instantané (PVa,PVb) et dans laquelle les moyens de pilotage comprennent un troisième moyen comparateur (84), qui délivre un troisième signal d'entrée (S3) représentatif de l'écart entre une pression maximale (Pvmax) admissible à la sortie du vérin d'injection (40a,40b) et le deuxième signal instantané (PVa,PVb), le signal de régulation de débit (SRQ) étant établi par la carte de régulation (78) en logique floue, également à partir du troisième signal d'entrée (S3).

8. Installation selon l'une quelconque des revendications 6 et 7, dans laquelle les moyens de pilotage (72) comprennent des premiers moyens de limitation (86) qui comparent le signal de régulation de débit (SRQ) à un signal (SQ) de débit de référence, pour alimenter le variateur de vitesse (48a,48b) par un signal de commande de débit (SCQ) égal au signal (SQ) de débit de référence lorsque celui-ci est inférieur au signal de régulation de débit (SRQ), et égal au signal de régulation de débit (SRQ) dans le cas contraire.

9. Installation selon l'une quelconque des revendications 6 et 7 combinées avec la revendication 3, dans laquelle des moyens (58) de mesure de débit sont placés entre la deuxième sortie de la vanne trois voies (36) et le moule (10) et délivrent un troisième signal instantané (QE) et dans laquelle les moyens de pilotage (72) comprennent un quatrième moyen comparateur (90) qui délivre un quatrième signal d'entrée (S4) représentatif de l'écart entre une consigne de débit maximal (Qmax) et le troisième signal instantané (QE) et un cinquième moyen comparateur (92) qui délivre un cinquième signal d'entrée (S5) représentatif de la différence entre deux quatrième signaux d'entrée consécutifs, la carte de régulation (78) en logique floue délivrant, en mode "pression contrôlée" un signal de régulation de pression (SRP), à partir des quatrième et cinquième signaux d'entrée (S4,S5).

10. Installation selon la revendication 9, dans laquelle les moyens de pilotage (72) comprennent des deuxièmes moyens de limitation (94) qui comparent le signal de régulation de pression (SRP) à un signal (SPref) de pression de référence, pour alimenter les moyens de pressurisation (28,30) par un signal de commande de pression (SCP) égal au signal (SPref) de pression de référence lorsque celui-ci est inférieur au signal de régulation de pression (SRP), et égal à ce signal de régulation de pression (SRP) dans le cas contraire.

11. Installation selon l'une quelconque des revendications précédentes, dans laquelle deux vérins d'injection (40a,40b) sont montés en parallèle entre une deuxième vanne trois voies (42) comportant une entrée reliée au pot d'alimentation (16) et une troisième vanne trois voies (50) comportant une sortie reliée au moule (10), les moyens de pilotage (72) actionnant ces deuxième et troisième vannes trois voies (42,50), dans le mode "débit contrôlé", de façon telle que l'un des vérins d'injection (40a,40b) soit relié au pot d'alimentation (16) et isolé du moule (10) alors que l'autre vérin d'injection est relié au moule (10) et isolé du pot d'alimentation (16), et inversement.

## Patentansprüche

1. Anlage zur Herstellung von Teilen aus Verbundmaterial durch Transfer- bzw. Spritzpressen von Harz, wobei die Anlage umfasst:
- mindestens eine Gießform (10), die eine faserige Vorform (12) aufnehmen kann,
- Kompaktierungsmittel der Vorform in der Gießform mindestens einen Zylinder (40a,40b) zum Einspritzen von Harz in die Form,
- mindestens einen Tiegel (16) zur Zuführung von Harz,
- Steuermittel, welche die Anlage in einem Modus "gesteuerter Durchsatz" betreiben können, wobei das Harz von dem Zuführtiegel (16) zu einem Spritzzylinder (40a,40b) transportiert und dann über diesen Spritzzylinder in die Gießform eingespritzt wird, und wobei die Kompaktierungsmittel (14) im allgemeinen eine starke Kompaktierung der faserigen Vorform (12) gewährleisten, und die Steuermittel das Harz mit einem im allgemeinen konstanten Durchsatz in die Gießform spritzen, wobei die Anlage **dadurch gekennzeichnet ist, dass** die Steuermittel die Anlage auch in einem Modus "gesteuerter Druck" betreiben können, wobei das Harz über den Zuführtiegel (16) mit einem im allgemeinen konstanten Druck direkt in die Gießform eingespritzt wird und die Kompaktierungsmittel (14) im allgemeinen eine schwache Kompaktierung der faserigen Vorform (12) ausführen, und die Anlage außerdem Umschaltmittel (74) der Steuermittel zwischen den Modi "gesteuerter Durchsatz" und "gesteuerter Druck" aufweist.

2. Anlage nach Anspruch 1, wobei die Steuermittel ein Dreiwegeventil (36) betätigen, das einen mit dem Zuführtiegel (16) verbundenen Eingang, einen mit dem Spritzzylinder (40a,40b) verbundenen ersten Ausgang und einen mit der Gießform (10) verbundenen zweiten Ausgang aufweist, wobei der Eingang des Dreiwegeventils (36) mit dem ersten Ausgang im Modus "gesteuerter Durchsatz" und mit dem zweiten Ausgang im Modus "gesteuerter Druck" in Verbindung steht.

3. Anlage nach einem der Ansprüche 1 oder 2, wobei die Steuermittel auf die Druckbeaufschlagungsmittel (28,30) des Zuführtiegels derart einwirken, dass ein konstanter Druck auf den Tiegel im Modus "gesteuerter Durchsatz" einwirkt, während ein geregelter Druck im Modus "gesteuerter Druck" auf den Tiegel einwirkt.

4. Anlage nach den Ansprüchen 2 und 3 in Kombination, wobei mehrere Zuführtiegel (16) parallel in einem mit den Druckbeaufschlagungsmitteln (28,30) verbundenen Behälter 20 angebracht sind und jeder der Zuführtiegel (16) der Reihe nach mit dem Eingang des Dreiwegeventils (36) über ein von den Steuermitteln (72) gesteuertes Ventil 32 verbunden ist.

5. Anlage nach einem der vorangehenden Ansprüche, wobei der Spritzzylinder (40a,40b) von einem Elektromotor (46a,46b) gesteuert wird, dem ein Regelantrieb (48a,48b) zugeordnet ist, und die Steuermittel (72) auf den Regelantrieb (48a,48b) im Modus "gesteuerter Durchsatz" einwirken, damit Harz mit geregeltem Durchsatz in die Gießform (10) über den Spritzzylinder eingespritzt wird.

6. Anlage nach Anspruch 5, wobei ein erster Druckfühler (CPE) am Eingang der Form angeordnet ist und ein erstes Istwertsignal (PE) liefert, und wobei die Steuermittel (72) ein erstes Vergleichsmittel 80, welches ein erstes Eingangssignal S1 liefert, das den Abstand zwischen einem Maximaldruck-Bezugswert (PEMAX) und dem ersten Istwertsignal PE darstellt, ein zweites Vergleichsmittel (82), das ein zweites Eingangssignal S2 liefert, welches die Differenz zwischen zwei ersten aufeinanderfolgenden Eingangssignalen darstellt, sowie mindestens eines Software-Steuerungskarte (78), die im Modus "gesteuerter Durchsatz" ein Durchsatz-Regelsignal (SRQ) auf der Basis des ersten und zweiten Eingangssignals (S1,S2) liefert, aufweisen.

7. Anlage nach Anspruch 6, wobei ein zweiter Druckfühler (CPVa,CPVb) am Ausgang jedes Spritzzylinders (40a,40b) angeordnet ist und ein zweites Zeitpunktsignal (PVa,PVb) liefert, und wobei die Steuermittel ein drittes Vergleichsmittel 84 aufweisen, welches ein drittes Eingangssignal S3 liefert, das den Abstand zwischen einem zulässigen Maximaldruck (PVMAX) am Ausgang des Spritzzylinders (40a,40b) und dem zweiten Istwertsignal (PVa,PVb) darstellt, wobei das Durchsatz-Regelungssignal von der Software-Stuerungskarte (78) ebenfalls auf der Basis des dritten Eingangssignals S3 erstellt wird.

8. Anlage nach einem der Ansprüche 6 oder 7, wobei die Steuermittel (72) erste Begrenzungsmittel 86 aufweisen, welche das Durchsatz-Regelsignal (SRQ) mit einem Bezugs-Durchsatzsignal (SQ) vergleichen, um den Regelantrieb (48a,48b) mit einem Steuersignal des Durchsatzes (SCQ) zu versorgen, das gleich dem Bezugs-Durchsatzsignal (SQ) ist, wenn dieses kleiner ist als das Durchsatz-Regelsignal (SRQ), und im gegenteiligen Fall gleich dem Durchsatz-Regelsignal (SRQ) ist.

9. Anlage nach einem der Ansprüche 6 oder 7 in Kombination mit Anspruch 3, wobei die Mittel 58 zum Messen des Durchsatzes zwischen dem zweiten Ausgang des Dreiwegeventils (36) und der Gießform (10) angeordnet sind und ein drittes Istwertsignal (QE) liefern, und wobei die Steuermittel (72) ein viertes Vergleichsmittel 90, welches ein viertes Eingangssignal S4 liefert, das den Abstand zwischen einem Bezugswert für den maximalen Durchsatz (QMAX) und dem dritten Istwertsignal (QE) darstellt, aufweisen, sowie ein fünftes Vergleichsmittel 92, das ein fünftes Eingangssignal S5 liefert, welches die Differenz zwischen zwei aufeinanderfolgenden vierten Eingangssignalen darstellt, wobei die Software-Regelkarte (78) im Modus "gesteuerter Druck" ein Druckregelsignal (SRP) auf der Basis der vierten und fünften Eingangssignale (S4,S5) liefert.

10. Anlage nach Anspruch 9, wobei die Steuermittel (72) zweite Begrenzungsmittel (94) aufweisen, welche das Druckregelsignal (SRP) mit einem Druck-Bezugssignal (SPref) vergleichen, um die Druckbeaufschlagungsmittel (28,30) mit einem Drucksteuersignal (SCP) gleich dem Druck-Bezugssignal (SPref) ist, zu versorgen, wenn dieses kleiner ist als das Druckregelsignal (SRP) und das im gegenteiligen Fall mit diesem Druckregelsignal (SRP) gleich ist.

11. Anlage nach einem der vorhergehenden Ansprüche, wobei zwei Spritzzylinder (40a,40b) parallel zwischen einem zweiten Dreiwegeventil (42), das einen mit dem Zuführtiegel (16) verbundenen Eingang aufweist, und einem dritten Dreiwegeventil (50), das einen mit der Gießform (10) verbundenen Ausgang aufweist, angebracht sind, wobei die Steuermittel (72) diese zweiten und dritten Dreiwegeventile (42,50) im Modus "gesteuerter Durchsatz" derart betätigen, dass einer der Spritzzylinder (40a,40b) mit dem Zuführtiegel (16) verbunden und von der Gießform (10) isoliert ist, während der andere Spritzzylinder mit der Gießform (10) verbunden und vom Zuführtiegel (16) isoliert ist, und umgekehrt.

## Claims

1. Apparatus for the manufacture of composite parts by resin transfer molding, said apparatus comprising:
- at least one mold (10) able to accept a fibrous preform (12),
- means (14) for compressing the preform in the mold,
- at least one injection cylinder (40a, 40b) for injecting the resin into the mold,
- at least one resin supply vessel (16),
- control means capable of operating the apparatus in the controlled flow rate mode in which the resin is transferred from the resin supply vessel (16) to the injection cylinder (40a, 40b) before being injected into the mold by said cylinder and in which the compression means (14) generally ensure a high compression of the fibrous preform (12), the injecting means injecting the resin into the mold at a generally constant flow rate,
**characterized in that** the control means are also capable of making the installation operate in a controlled pressure mold, in which the resin is directly injected into the mold by the supply vessel (16) at a generally constant pressure, and in which the compression means (14) generally ensure a limited compression of the fibrous preform (12), the apparatus also comprises means (74) for switching the control means between the controlled flow rate moda and the controlled pressure mode.

2. Apparatus according to claim 1, wherein the control means act on a three-way valve (36) having an inlet connected to the resin supply vessel (16), a first outlet connected to the injection cylinder (40a, 40b) and a second outlet connected to the mold (10), the inlet of the three-way valve (36) being connected to the first outlet in controlled flow-rate mode and to the second outlet in controlled pressure mode.

3. Apparatus according to either of the claims 1 and 2, wherein the control means (72) act upon means (28, 30) for pressurizing the resin supply vessel so that constant pressure is applied to the vessel in controlled flow-rate mode while variable pressure is applied to the vessel in controlled pressure mode.

4. Apparatus according to claim 2 and 3 combined, wherein several resin supply vessels (16) are connected in parallel in a tank (20) connected to said pressurizing means (28, 30), each resin supply vessel (16) being connected in turn to the inlet of the three-way valve (36) via a valve (32) commanded by the control means (72).

5. Apparatus according to any one of the preceding claims, wherein the injection cylinder (40a, 40b) is controlled by an electric motor (46a, 46b) fitted with a speed regulator (48a, 48b), the control means (72) acting on the speed regulator (48a, 48b) in controlled flow-rate mode so that the injection cylinder injects a controlled flow of resin into the mold (10).

6. Apparatus according to claim 5, wherein a first pressure sensor (CPE) is located on the mold inlet and supplies a first instantaneous signal (PE) and wherein the control means (72) comprise a first comparator means (80) that supplies a first input signal (S1) representative of the difference between a maximum pressure setting (Pemax) and the first input signal (PE), a second comparator means (82) that supplies a second input signal (S2) representative of the difference between two consecutive first input signals, and at least one fuzzy logic control card (78) that, in controlled flow-rate mode, uses the first and second input signals (S1, S2) to supply a flow-rate control signal (SRQ).

7. Apparatus according to claim 6, wherein a second pressure sensor (CPVa, CPVb) is located on the outlet of each injection cylinder (40a, 40b) and supplies a second instantaneous signal (PVa, PVb) and wherein the control means comprise third comparator means (84) that supply a third input signal (S3) representative of the difference between a maximum permissible pressure (PVmax) on the outlet of the injection cylinder (40a, 40b) and the second instantaneous signal (PVa, PVb), the flow-rate control signal being set by the fuzzy logic control card (78), also using the third input signals (S3).

8. Apparatus according to either of the claims 6 and 7, wherein the control means (72) comprise first limiting means (86) that compare the flow-rate control signal (SRQ) with a reference flow-rate signal (SQ) to supply a flow-rate control signal (SCQ) to the speed regulator (48a, 48b) that is equal to the reference flow-rate signal (SQ) when said signal is less than the flow-rate control signal (SRQ), and equal to the flow-rate control signal (SRQ) if not.

9. Apparatus according to either of the claims 6 and 7 combined with claim 3, wherein the flow-rate measuring means (58) are also located between the second outlet of the three-way valve (36) and the mold (10) and supply a third instantaneous signal (QE), and wherein control means (72) comprising a fourth comparator means (90) supply a fourth input signal flow-rate control signal (S4) representative of the difference between a maximum permissible flow-rate (Qmax) and the third instantaneous signal (QE) and a fifth comparator means (92) supplying a fifth input signal (S5) representative of the difference between two consecutive fourth input signals, the fuzzy logic control card (78) using the fourth and fifth input signals (S4, S5) to supply a pressure-regulating signal (SRP) in controlled pressure mode.

10. Apparatus according to claim 9, wherein the control means (72) comprise second limiting means (94) that compare the pressure control signal (SRP) with a reference pressure signal (SPref) to supply the pressurizing means (28, 30) with a pressure control signal (SCP) equal to the reference pressure signal (SPref) when the latter is less than the pressure control signal (SRP) and equal to the pressure control signal (SRP) if not.

11. Apparatus according to any one of the preceding claims, wherein two injection cylinders (40a, 40b) are mounted in parallel between a second three-way valve (42) comprising an inlet connected to the resin supply vessel (16) and a third three-way valve (50) comprising an outlet connected to the mold (10), the control means (72) actuating these second and third three-way valves (42, 50) in controlled flow-rate mode so that one of the injection cylinders (40a, 40b) is connected to the resin supply vessel (16) and isolated from the mold (10) while the other injection cylinder is connected to the mold (10) and isolated from the resin supply vessel (16), and conversely.
